# EUROPÄISCHE PATENTANMELDUNG

(11) **EP 0 645 611 A1**
(43) Veröffentlichungstag der Anmeldung: **29.03.1995**
(21) Anmeldenummer: 94115069.0
(22) Anmeldetag: 24.09.1994
(51) Int. Cl.: G01F 23/28, G01F 23/04

(54) **Vorrichtung zur Bestimmung von optisch sichtbaren Phasengrenzen in Flüssigkeiten**

(30) Priorität: 25.09.1993 DE 4333666
(71) Anmelder: GRUNDIG E.M.V. Elektro-Mechanische Versuchsanstalt Max Grundig GmbH & Co. KG, D-90762 Fürth (DE)
(72) Erfinder: Hallas, Ernst, Dr., c/o Grundig E.M.V., D-90748 Fürth (DE)

(57) **Zusammenfassung**

Die Erfindung betrifft eine Vorrichtung zur Bestimmung von optisch sichtbaren Phasengrenzen in Flüssigkeiten, insbesondere des Schlammspiegels in Abwasseranlagen, bei denen die Phasengrenze zwischen den Flüssigkeitsschichten, beispielsweise der sich absetzenden Schlamm- und der Wasserschicht, erfaßt wird. Es stellt sich die Aufgabe, eine Vorrichtung anzugeben, bei der die Phasengrenze, also der Schlammspiegel, sicherer bestimmt werden kann.
Gemäß der Erfindung wird in dem Bereich, in dem der Schlammspiegel zu erwarten ist, ein lichtemittierender Meßstab angeordnet, der unter einem vorgebbaren Winkel gegenüber der Horizontalen geneigt ist. Gegenüber der Oberfläche dieses Meßstabes ist eine Aufnahmekamera angeordnet, mit der der Bereich des Meßstabes aufgenommen wird. An die Aufnahmekamera ist eine Auswerteeinheit angeschlossen, die aus dem aufgenommenen Bild die Höhe der Phasengrenze bestimmt.

## Beschreibung

Die Erfindung betrifft eine Vorrichtung zur Bestimmung von optisch sichtbaren Phasengrenzen in Flüssigkeiten, insbesondere des Schlammspiegels in Abwasseranlagen, gemäß dem Oberbegriff des Anspruches 1.

In Absetz- bzw. Nachklärbecken von Klarwerksanlagen oder auch Industrieanlagen bilden sich am Boden des Beckens eine oder mehrere Schichten unterschiedlicher Dichte durch die Sedimentation, insbesondere von z.B. ungelösten absetzbaren Stoffen, aus.
Über der Schlammschicht in Nachklärbecken von Klärwerken befindet sich beispielsweise eine Wasserschicht, die durch das geklärte Abwasser gebildet wird. In den Absetzbecken sinkt beispielsweise der Belebtschlamm zu Boden und wird als Träger der zur biologischen Reinigung notwendigen Kleinlebewesen größtenteils in das Belebungsbecken zurückgepumpt. Durch das Zurückpumpen des Belebtschlammes in das Belebungsbecken wird erreicht, daß die Belebtschlammschicht auf einer prozeßvorgegebenen Höhe gehalten werden kann und der Belebtschlamm rechtzeitig dem Klärprozeß wieder zugeführt werden kann.

Zur Bestimmung der Höhe der Schlammschicht sind Vorrichtungen bekannt, bei denen die Phasengrenze zwischen zwei Flüssigkeitsschichten, insbesondere der Schlamm- und der Wasserschicht, also der Schlammspiegel, mit Hilfe von Transmissions- oder Reflexionsmessungen bestimmt wird.

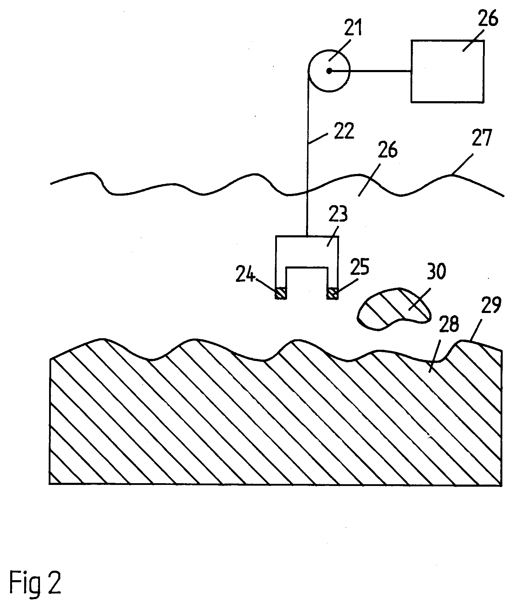

Eine derartige Vorrichtung ist in Figur 2 dargestellt. Diese Vorrichtung besteht aus einer Rolle 21, an der über eine seilförmige Verbindung 22 ein Sondengehäuse 23 befestigt ist. Das Sondengehäuse 23 hat eine nach unten offene, U-förmige Gestalt. An den gegenüberliegenden Enden der U-Form sind eine Lichtquelle 24 und ein Lichtempfänger 25 angeordnet. Das Gehäuse 23 wird über die Rolle 21 in das Becken eingeführt, wobei während des Einführvorganges das Transmissionsverhalten gemessen wird. Hierzu kann beispielsweise eine Signalleitung in der seilförmigen Verbindung 22 enthalten sein, die die Meßwerte an eine Auswerteeinheit 26 weitergibt. Wenn das Sondengehäuse 23 vom Wasser in den Schlamm eintritt wird die Transmission des Lichtes der Lichtquelle 24 auf den Lichtempfänger 25 absinken und in der Auswerteeinheit 26 wird die Phasengrenze erkannt. Über die Umdrehungszahl der Rolle 21 kann die Höhe der Phasengrenze bestimmt werden.

Der Nachteil dieser bekannten Anordnung besteht darin, daß Schlammeinschlüsse (30) in der Wasserphase oder Wassereinschlüsse in der Schlammphase zu falschen Meßergebnissen führen können.

Es stellt sich deshalb die Aufgabe, eine Vorrichtung anzugeben, bei der die Phasengrenze, beispielsweise der Schlammspiegel, sicherer bestimmt werden kann.

Diese Aufgabe wird bei einer Vorrichtung gemäß dem Oberbegriff des Anspruches 1 durch die kennzeichnenden Merkmale des Anspruches 1 gelöst. Vorteilhafte Ausgestaltungen der Erfindung sind in den abhängigen Ansprüchen angegeben.

Gemäß der Erfindung wird in dem Bereich, in dem der Schlammspiegel zu erwarten ist, ein lichtemittierender Meßstab angeordnet, der unter einem vorgebbaren Winkeln α gegenüber der Horizontalen geneigt ist. Gegenüber der Oberfläche dieses Meßstabes ist eine Aufnahmekamera angeordnet, mit der der Bereich des Meßstabes aufgenommen wird. An die Aufnahmekamera ist eine Auswerteeinheit angeschlossen, die aus dem aufgenommenen Bild die Höhe der Phasengrenze bestimmt.

Der Vorteil der erfindungsgemäßen Vorrichtung besteht insbesondere darin, daß auch Wassereinschlüsse im Schlammbereich und Schlammeinschlüsse im Wasserbereich mit großer Sicherheit erkannt werden, da ein größerer Bereich simultan beobachtet wird als dies bei den bekannten Meßmethoden der Fall ist. Einschlüsse erscheinen bei der Auswertung als kleine Bereiche, die gegenüber dem großen Schlamm- bzw. Wasserbereich unterhalb und oberhalb der Phasengrenze erkannt werden.

Die Auswerteeinheit der erfindungsgemäßen Vorrichtung ist dabei so ausgelegt, daß sie die Helligkeitsunterschiede im aufgenommenen Bild bewertet. Da im Schlammbereich das Licht des lichtemittierenden Meßstabes stärker gedämpft wird als im Wasserbereich, kann im Übergangsbereich von der Schlamm- in die Wasserphase ein deutlicher Helligkeitsunterschied festgestellt werden.

Als vorteilhaft für die Beurteilung, ob eine Phasengrenze vorliegt oder nicht, hat es sich erwiesen, einen Schwellwert für die Differenz der Helligkeitswerte benachbarter Bereiche festzulegen, bei dessen Überschreiten die Phasengrenze erkannt wird. Auf diese Weise kann eine Schwelle vorgegeben werden, mit der sicher eine Fehlbeurteilung auf Grund von Wassertrübungen durch gelöste Stoffe ausgeschlossen wird.

Zur zusätzlichen Überwachung und Kontrolle durch Bedienpersonal ist es vorteilhaft, an die Aufnahmekamera einen Monitor anzuschließen, auf dem das aufgenommene Bild überwacht werden kann.

Eine andere vorteilhafte Ausgestaltung der Erfindung sieht vor, daß eine Schlammrückführungspumpe oder Überschußschlammpumpe an die Auswerteeinheit angeschlossen wird, mit der der Schlammspiegel in Abhängigkeit des Meßergebnisses bei der Bestimmung der Pasengrenze in einem vorgebbaren Höhenbereich gehalten werden kann. Auf diese Weise kann die Regelung der Schlammspiegelhöhe automatisch erfolgen.

Zur Verminderung von Wartungsarbeiten durch Bedienpersonal ist es vorteilhaft, die Oberfläche des lichtemittierenden Meßstabes mit einer Ultraschallreinigung zu versehen. Bei dieser Ultraschallreinigung wird die Oberfläche des lichtemittierenden Meßstabes mit Hilfe von beispielsweise an der Oberfläche des Meßstabes angeordneten Ultraschallschwingern zu Schwingungen angeregt, die eine Reinigungswirkung erzielen.

Eine weitere vorteilhafte Ausgestaltung der Erfindung sieht vor, daß die Aufnahmekamera in einem wasserdichten Gehäuse eingeschlossen wird. Dieses Gehäuse besteht im Bereich des Objektives der Kamera aus lichtdurchlässigem Material. Das wasserdichte Gehäuse bietet für die Kamera sowohl Schutz vor Nässe als auch vor mechanischen Beschädigungen.
Auch bei der Kamera können die Wartungsarbeiten vermindert werden, wenn der lichtdurchlässige Bereich des wasserdichten Gehäuses vor dem Objektiv mittels Ultraschall gereinigt wird.

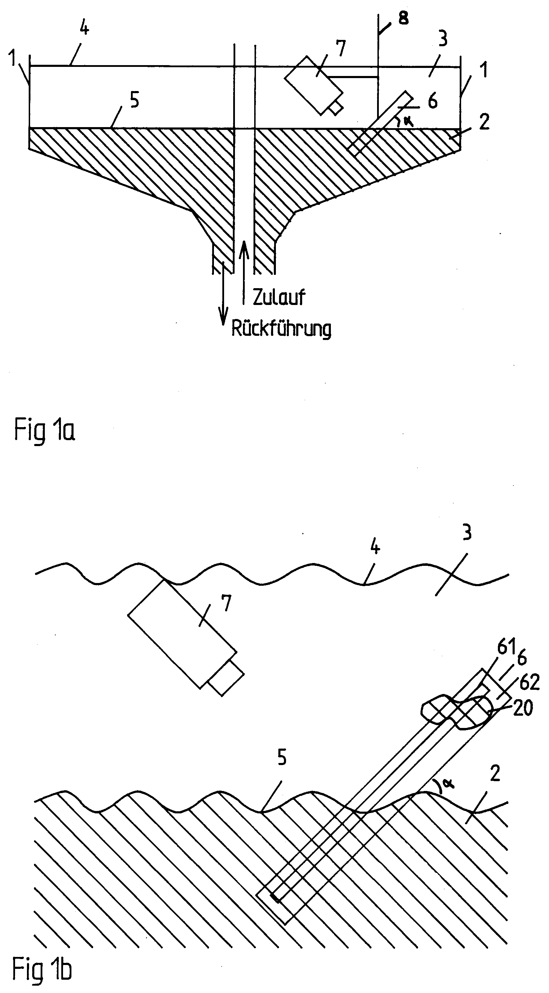

Im folgenden wird die Erfindung an Hand der Figur 1 näher erläutert.
Es zeigen:
Figur 1 einen Schlammspiegelmesser gemäß der Erfindung,
Figur 2 einen Schlammspiegelmesser nach dem bekannten Stand der Technik.

In Figur 1a ist schematisch ein Absetz- bzw. Nachklärbecken 1 dargestellt, in dem sich über einer Schlammschicht 2 mit der Oberfläche 5 eine Wasserschicht 3 mit der Wasseroberfläche 4 befindet. Die Höhe der Schlamm- bzw. Wasserschicht wird über einen Zulauf für Ab- oder Prozeßwasser und über eine Rückführung für Schlamm geregelt. Im Bereich des Überganges von der Schlammschicht 2 in die Wasserschicht 3 ist ein lichtemittierender Meßstab 6 angeordnet, der unter einem vorgebbaren Winkel α gegenüber der Horizontalen geneigt ist. Gegenüber dem lichtemittierenden Meßstab 6 ist eine Aufnahmekamera 7 angeordnet, die den Bereich des lichtemittierenden Meßstabes 6 aufnimmt. Sowohl die Kamera 7 als auch der lichtemittierende Meßstab 6 werden von einer Halterung 8 getragen, die auch die elektrischen Versorgungsleitungen und die Datenleitungen beinhaltet.

In der Figur 1b ist der Ausschnitt aus Figur 1a dargestellt, der den Bereich des lichtemittierenden Meßstabes 6 und der Aufnahmekamera 7 zeigt. Figurelemente, die bereits in Figur 1a beschrieben sind, erhalten die gleichen Bezugszeichen.
Aus Figur 1b ist ersichtlich, daß der lichtemittierende Meßstab 6 aus einem Gehäuse 62 besteht, das zumindest auf der der Aufnahmekamera 7 zugewandten Seite aus lichtdurchlässigem Material besteht. Im Inneren des Gehäuses 62 befindet sich ein lichtemittierendes Element 61, das beispielsweise aus einer Leuchtstoffröhre oder einzelnen, nebeneinander angeordneten Lichtquellen besteht.

Das von der Aufnahmekamera 7 aufgenommene Bild enthält den Bereich des Meßstabes 6. Der Meßstab 6 liegt teils im Bereich der Schlammschicht 2 und teils im Bereich der Wasserschicht 3. Durch die Schlammschicht 2 wird das von dem Meßstab 6 emittierte Licht stärker gedämpft als durch die Wasserschicht, so daß im aufgenommenen Bild der Kamera 7 ein deutlicher Helligkeitsunterschied festgestellt werden kann. Zur elektronischen Auswertung des Helligkeitsunterschiedes wird vorzugsweise eine automatische Bildverarbeitungseinrichtung, die in der Figur nicht dargestellt ist, verwendet, die an die Aufnahmekamera 7 angeschlossen ist. In dieser Bildverarbeitungseinheit werden die Helligkeitswerte des Bildsignales bestimmt. Im Übergangsbereich zwischen dem Schlammbereich 2 und dem Wasserbereich 3 wird auch in dem aufgenommenen Bild ein Übergang von einem dunklen Bildbereich in einen helleren Bildbereich erkannt, der die Höhe des Schlammspiegels angibt.
In vorteilhafter Weise wird jeweils für benachbarte Bildbereiche ein Mittelwert der Helligkeitswerte gebildet und die Differenz der Mittelwerte von benachbarten Bildbereichen gebildet. Bei Überschreiten eines vorgegebenen Schwellwertes der Differenz wird eine Phasengrenze, d.h. der Schlammspiegel, erkannt.

Die erfindungsgemäße Vorrichtung bietet den Vorteil, daß Schlammeinschlüsse (30) im Wasserbereich leicht erkannt werden können, da nur ein kleiner Bereich des lichtemittierenden Meßstabes verdeckt wird, der von helleren Bildbereichen umgeben ist.

## Patentansprüche

1. Vorrichtung zur Bestimmung von optisch sichtbaren Phasengrenzen in Flüssigkeiten, insbesondere des Schlammspiegels in Abwasseranlagen, bei denen die Phasengrenze zwischen den Flüssigkeitsschichten erfasst wird,
**dadurch gekennzeichnet**, daß
- im Bereich des Schlammspiegels unter einem vorgebbaren Winkel α gegenüber der Horizontalrichtung ein lichtemittierender Meßstab (6) angebracht ist,
- auf die Oberfläche des lichtemittierenden Meßstabes (6) gerichtet eine Aufnahmekamera (7) angeordnet ist, mit der die Lichtstrahlung des lichtemittierenden Meßstabes (6) erfaßt wird, und
- an die Aufnahmekamera (7) eine Auswerteeinheit angeschlossen ist, die aus dem aufgenommenen Bild die Höhe der Phasengrenze bestimmt.

2. Vorrichtung nach Anspruch 1,
**dadurch gekennzeichnet**, daß
die Auswerteeinheit so ausgelegt ist, daß zur Bestimmung der phasengrenze die Helligkeitsunterschiede im aufgenommenen Bild bewertet werden.

3. Vorrichtung nach Anspruch 1 oder 2,
**dadurch gekennzeichnet**, daß
die Auswerteeinheit so ausgelegt ist, daß bei Überschreitung einer Schwelle der Differenz der Helligkeitswerte benachbarter Bildbereiche die Phasengrenze festgelegt wird.

4. Vorrichtung nach einem der Ansprüche 1 bis 3,
**dadurch gekennzeichnet**, daß
die Aufnahmekamera (7) mit einem Monitor verbunden ist, auf dem das aufgenommene Bild der phasengrenze dargestellt wird.

5. Vorrichtung nach einem der Ansprüche 1 bis 4,
**dadurch gekennzeichnet**, daß
die Auswerteeinheit eine Schlammrückführungspumpe ansteuert, mit der der Schlammspiegel auf einer vorgegebenen Höhe gehalten wird.

6. Vorrichtung nach einem der Ansprüche 1 bis 5,
**dadurch gekennzeichnet**, daß
die Oberfläche des lichtemittierenden Meßstabes (6) mittels Ultraschall gereinigt wird.

7. Vorrichtung nach einem der Ansprüche 1 bis 6,
**dadurch gekennzeichnet**, daß
die Aufnahmekamera (7) in einem wasserdichten Gehäuse eingeschlossen ist, das im Bereich des Objektives der Aufnahmekamera (7) aus lichtdurchlässigem Material besteht.

8. Vorrichtung nach Anspruch 7,
**dadurch gekennzeichnet**, daß
der lichtdurchlässige Bereich des wasserdichten Gehäuses mittels Ultraschall gereinigt wird.
